# EUROPÄISCHE PATENTSCHRIFT

(11) **EP 1 006 014 B1**
(45) Veröffentlichungstag und Bekanntmachung des Hinweises auf die Patenterteilung: **08.10.2003**
(21) Anmeldenummer: 99123081.4
(22) Anmeldetag: 22.11.1999
(51) Int. Cl.: B60K 15/01, B60K 15/03

(54) **Kraftstoffbehälter und Verfahren zur Montage von Leitungen in einem Kraftstoffbehälter**
Fuel tank and method of mounting tubes in a fuel tank
Réservoir de carburant et méthode de fixation des conduits dans un réservoir de carburant

(30) Priorität: 01.12.1998 DE 19855387
(43) Veröffentlichungstag der Anmeldung: 07.06.2000
(73) Patentinhaber: Siemens Aktiengesellschaft, 80333 München (DE)
(72) Erfinder: Keller, Dieter, 63743 Aschaffenburg (DE)

(56) Entgegenhaltungen:
- EP-A- 0 588 420
- US-A- 4 135 562

## Beschreibung

Die Erfindung betrifft einen Kraftstoffbehälter für ein Kraftfahrzeug mit mehreren zu seiner Belüftung oder zur Förderung von Kraftstoff vorgesehenen Leitungen. Weiterhin betrifft die Erfindung zwei Verfahren zur Montage von Leitungen in einem Kraftstoffbehälter, wobei einer der Kraftstoffbehälter im Blasverfahren und der andere Kraftstoffbehälter durch Zusammenfügen zweier Formteile gefertigt wird. Derartige Kraftstoffbehälter und Verfahren sind allgemein bekannt.

Heutige Kraftstoffbehälter für Kraftfahrzeuge sind meist kompliziert geformte Kunststoffteile und weisen mehrere Verwinklungen oder Kammern auf. Die Kraftstoffbehälter benötigen eine Vielzahl von Leitungen zu deren Belüftung während des Tankens oder während des Betriebs oder zum Fördern von Kraftstoff mittels Saugstrahlpumpen zwischen den verschiedenen Kammern. Die Leitungen werden teilweise innerhalb des Kraftstoffbehälters und teilweise zur Vereinfachung der Montage an der Außenseite des Kraftstoffbehälters verlegt und dauerhaft befestigt.

Nachteilig bei den bekannten Kraftstoffbehältern ist, daß sich die Befestigung der Leitungen an der Innenseite der Wandung des Kraftstoffbehälters sehr aufwendig gestaltet oder bei besonders kompliziert geformten Kraftstoffbehältern häufig nicht möglich ist. In der Praxis behilft man sich damit, daß die Leitungen zunächst nach außen geführt und an anderer Stellen wieder zurück in den Kraftstoffbehälter geführt werden. Hierdurch ist der Kraftstoffbehälter jedoch wegen der Vielzahl der Teile aufwendig zu montieren und weist eine hohe Anzahl von Dichtstellen auf. Durch die Dichtstellen können Kraftstoffdämpfe entweichen. Weiterhin können die Leitungen beispielsweise bei einem Unfall des Kraftfahrzeuges von dem Kraftstoffbehälter abreißen.

Der Erfindung liegt das Problem zugrunde, einen Kraftstoffbehälter der eingangs genannten Art so zu gestalten, daß er besonders einfach zu montieren ist und daß Entweichen von Kraftstoffdämpfen weitgehend verhindert wird. Weiterhin sollen zwei möglichst einfache Verfahren zur Montage der Leitungen im Kraftstoffbehälter geschaffen werden.

Das erstgenannte Problem wird erfindungsgemäß dadurch gelöst, daß die Leitungen mittels zumindest eines Federelementes gegen die Innenseite der Wandung des Kraftstoffbehälters vorgespannt sind.

Durch diese Gestaltung werden die Leitungen innerhalb des Kraftstoffbehälters von dem Federelement gehalten. Eine zusätzliche Befestigung der Leitungen an der Innenseite des Kraftstoffbehälters ist deshalb häufig nicht erforderlich. Im einfachsten Fall lassen sich die Leitungen zusammen mit dem vorgespannten Federelement durch eine ohnehin vorhandene Öffnung für eine Fördereinheit in den Kraftstoffbehälter einführen. Im Kraftstoffbehälter spannt das Federelement die Leitungen gegen die Wandung vor. Da dank der Erfindung die Leitungen nicht mehr aus dem Kraftstoffbehälter heraus- und anschließend wieder zurückgeführt werden müssen, sind diese beispielsweise bei einem Unfall des Kraftfahrzeuges besonders zuverlässig geschützt. Weiterhin befinden sich die Dichtstellen und Anschlüsse der Leitungen innerhalb des Kraftstoffbehälters, so daß ein Entweichen von Kraftstoffdämpfen aus dem Kraftstoffbehälter zuverlässig vermieden wird. Zur Vergleichmäßigung der Vorspannung der Leitungen lassen sich selbstverständlich mehrere Federelemente vorsehen.

Meist sind die Leitungen an einem im Kraftstoffbehälter angeordneten Schwalltopf oder an Saugstrahlpumpen angeschlossen oder sie weisen Ventile auf. Die Montage der Leitungen an solchen im Kraftstoffbehälter anzuordnenden Bauteilen läßt sich gemäß einer vorteilhaften Weiterbildung der Erfindung einfach außerhalb des Kraftstoffbehälters vornehmen, wenn an den Leitungen angeschlossene, im Innern des Kraftstoffbehälters angeordnete Bauteile von dem Federelement gegen die Innenseite der Wandung des Kraftstoffbehälters vorgespannt sind.

Die Leitungen werden gemäß einer anderen vorteilhaften Weiterbildung der Erfindung dauerhaft in ihrer vorgesehenen Lage gehalten, wenn die Leitungen formschlüssig an der Innenseite der Wandung befestigt sind.

Die formschlüssige Befestigung der Leitungen an der Innenseite des Kraftstoffbehälters gestaltet sich gemäß einer anderen vorteilhaften Weiterbildung der Erfindung konstruktiv besonders einfach, wenn die Wandung des Kraftstoffbehälters Vertiefungen zur Aufnahme der Leitungen oder der mit den Leitungen verbundenen Bauteile hat. Nach dem Einführen der Leitungen in den Kraftstoffbehälter lassen sich zudem die Leitungen oder die mit den Leitungen verbundenen Bauteile einfach durch ein leichtes Hin- und Herbewegen in den Vertiefungen einrasten.

Das Federelement kann entsprechend der Form des Kraftstoffbehälters nahezu beliebig gestaltet sein. Das Federelement kann beispielsweise starre und flexible Abschnitte aufweisen und ein- oder mehrteilig gestaltet sein. Das Federelement hat jedoch gemäß einer vorteilhaften Weiterbildung der Erfindung einen sehr großen Federweg und läßt sich zudem besonders kostengünstig herstellen, wenn es bügelförmig gestaltet ist.

Zur weiteren Vereinfachung der Montage des erfindungsgemäßen Kraftstoffbehälters trägt es bei, wenn mehrere der Leitungen eine bauliche Einheit bilden. Hierdurch wird zudem die Anzahl der zur Vorspannung erforderlichen Federelemente besonders gering gehalten.

Zur Verringerung der Fertigungskosten des erfindungsgemäßen Kraftstoffbehälters trägt es bei, wenn die Leitungen aus demselben Werkstoff gefertigt sind wie der Kraftstoffbehälter. Weiterhin weisen die Leitungen hierdurch eine hohe Eigenstabilität auf, so daß nur sehr wenige Federelemente zu deren Vorspannung erforderlich sind. Ein weiterer Vorteil dieser Gestaltung besteht darin, daß Unverträglichkeiten von verschiedenen Materialien ausgeschlossen werden.

Die Fertigungskosten des erfindungsgemäßen Kraftstoffbehälters werden weiter verringert, wenn das Federelement aus demselben Werkstoff gefertigt ist wie der Kraftstoffbehälter.

Zur weiteren Vereinfachung der Montage des erfindungsgemäßen Kraftstoffbehälters trägt es bei, wenn das Federelement einteilig mit den Leitungen gefertigt ist.

Das zweitgenannte Problem, nämlich die Schaffung eines ersten besonders einfachen Verfahrens zur Montage von Leitungen in einem Kraftstoffbehälter, welcher durch ein Erwärmen mit anschließendem Aufblasen eines schlauchförmigen Rohlings innerhalb einer Form erzeugt wird, wird erfindungsgemäß dadurch gelöst, daß die Leitungen an zumindest einem Federelement befestigt werden, das Federelement anschließend zusammengedrückt und zusammen mit den Leitungen in den Rohling eingeführt wird, und daß der Kraftstoffbehälter nach einem Entspannen des Federelementes durch das Erwärmen mit anschließendem Aufblasen erzeugt wird.

Durch dieses Verfahren läßt sich eine nahezu beliebige Anzahl von Leitungen und anderen mit den Leitungen verbundenen Bauteilen wie beispielsweise Saugstrahlpumpen und Ventile innerhalb des Kraftstoffbehälters anordnen. Die Leitungen und die mit den Leitungen verbundenen Bauteile werden von den Federelementen während des Aufblasens zuverlässig gegen die Innenseite der Wandung des Kraftstoffbehälters vorgespannt. Im aufgeblasenen Zustand des Kraftstoffbehälters sind die Leitungen und die Bauteile dann in ihren vorgesehenen Positionen gehalten. Dieses Verfahren führt insbesondere bei hohen Stückzahlen von Kraftstoffbehältern zu besonders niedrigen Fertigungskosten.

Das Problem der Schaffung eines zweiten besonders einfachen Verfahrens zur Montage von Leitungen in einem Kraftstoffbehälter, welcher durch Zusammenfügen zweier Formteile erzeugt wird, wird erfindungsgemäß dadurch gelöst, daß die Leitungen an zumindest einem Federelement befestigt werden, daß ein Teil der Leitungen und/oder des Federelementes an der Innenseite einer der Formteile befestigt wird und daß die Formteile anschließend gegen die Kraft des Federelementes zusammengefügt werden.

Hierdurch vereinfacht sich die Montage des Kraftstoffbehälters insoweit, daß die Leitungen nur an einem der Formteile befestigt werden müssen. Nach dem Zusammenfügen der Formteile sind die Leitungen und mit den Leitungen verbundenen Bauteile an dem zweiten Formteil von den Federelementen gehalten. Durch dieses Verfahren lassen sich die Leitungen und daran angeschlossene Bauteile besonders genau im Kraftstoffbehälter positionieren.

Die Leitungen werden gemäß einer vorteilhaften Weiterbildung der Erfindung besonders zuverlässig an der Innenseite der Wandung befestigt, wenn die Leitungen und/oder das Federelement nach dem Zusammenfügen der Formteile oder dem Aufblasen des Kraftstoffbehälters an der Innenseite der Wandung des Kraftstoffbehälters verschweißt oder verklebt werden. Da die Leitungen von den Federelementen ohnehin im Kraftstoffbehälter verspannt sind, werden erfindungsgemäß nur sehr wenige Schweißstellen oder Klebepunkte benötigt. Das Schweißen kann hierbei beispielsweise mit einem Laserstrahl erfolgen.

Die Leitungen lassen sich gemäß einer anderen vorteilhaften Weiterbildung der Erfindung mit besonders geringem Aufwand formschlüssig mit dem aus thermisch verformbarem Material gefertigten Kraftstoffbehälter verbinden, wenn nach dem Zusammenfügen der Formteile oder dem Aufblasen des Kraftstoffbehälters Bereiche der Wandung des Kraftstoffbehälters, gegen die die Leitungen vorgespannt sind, erwärmt und anschließend zur Erzeugung eines Formschlusses der Wandung mit den Leitungen plastisch verformt werden. Diese plastische Verformung kann beispielsweise mit einer heißen Zange erfolgen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1a, 1b: schematisch ein erfindungsgemäßes Verfahren zur Herstellung eines Kraftstoffbehälters im Blasverfahren,
- Fig.2a, 2b: schematisch ein erfindungsgemäßes Verfahren zur Herstellung eines Kraftstoffbehälters aus zwei Formteilen,
- Fig.3: eine formschlüssige Befestigung einer Leitung in einer Wandung eines Kraftstoffbehälters,
- Fig.4: eine weitere Ausführungsform der formschlüssigen Befestigung einer Leitung in der Wandung des Kraftstoffbehälters.

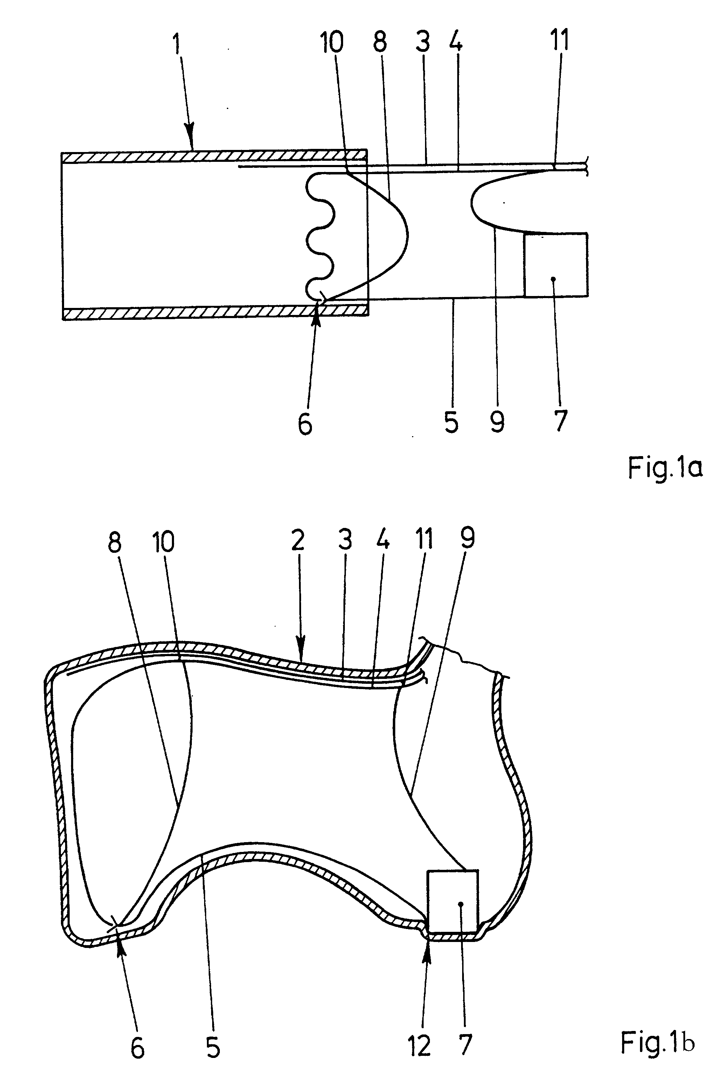

Die Figur 1a zeigt einen schlauchförmigen Rohling 1 für einen in Figur 1b dargestellten Kraftstoffbehälter 2. In den Rohling 1 werden eine als Entlüftungsleitung und zwei als Förderleitungen ausgebildete Leitungen 3 - 5 5 eingeschoben. Die als Förderleitungen ausgebildeten Leitungen 4, 5 sind an einer Saugstrahlpumpe 6 und an einem Schwalltopf 7 angeschlossen und werden über zwei bügelförmige Federelemente 8, 9 auf Abstand gehalten. Die Federelemente 8, 9 weisen hierfür Angriffspunkte an dem Schwalltopf 7 und nahe der Saugstrahlpumpe 6 auf. Zwei der Leitungen 3, 4 sind über Stege 10, 11 miteinander verbunden und bilden damit eine bauliche Einheit. In der in Figur 1a dargestellten Position sind die Federelemente 8, 9 zusammengedrückt. In diesem Zustand der Federelemente 8, 9 lassen sich der Schwalltopf 7, die Saugstrahlpumpe 6 zusammen mit den Leitungen 3 - 5 in den Rohling 1 einführen, bis sie sich innerhalb des Rohlings 1 befinden und von den Federelementen 8, 9 gegen dessen Innenseite vorgespannt sind.

Anschließend wird der Rohling 1 in eine nicht dargestellte Form eingeführt, erwärmt und dabei aufgeblasen. Die Federelemente 8, 9 spannen während des Aufblasens die Leitungen 3 - 5 nach außen vor. Nach einem Abkühlen kann der in Figur 1b dargestellte Kraftstoffbehälter 2 der Form entnommen werden. Die Leitungen 3 - 5 und die Saugstrahlpumpe 6 werden hierbei dauerhaft von den Federelementen 8, 9 gegen die Innenseite der Wandung des Kraftstoffbehälters 2 vorgespannt. Die Wandung des Kraftstoffbehälters 2 weist eine Vertiefung 12 für den Schwalltopf 7 auf.

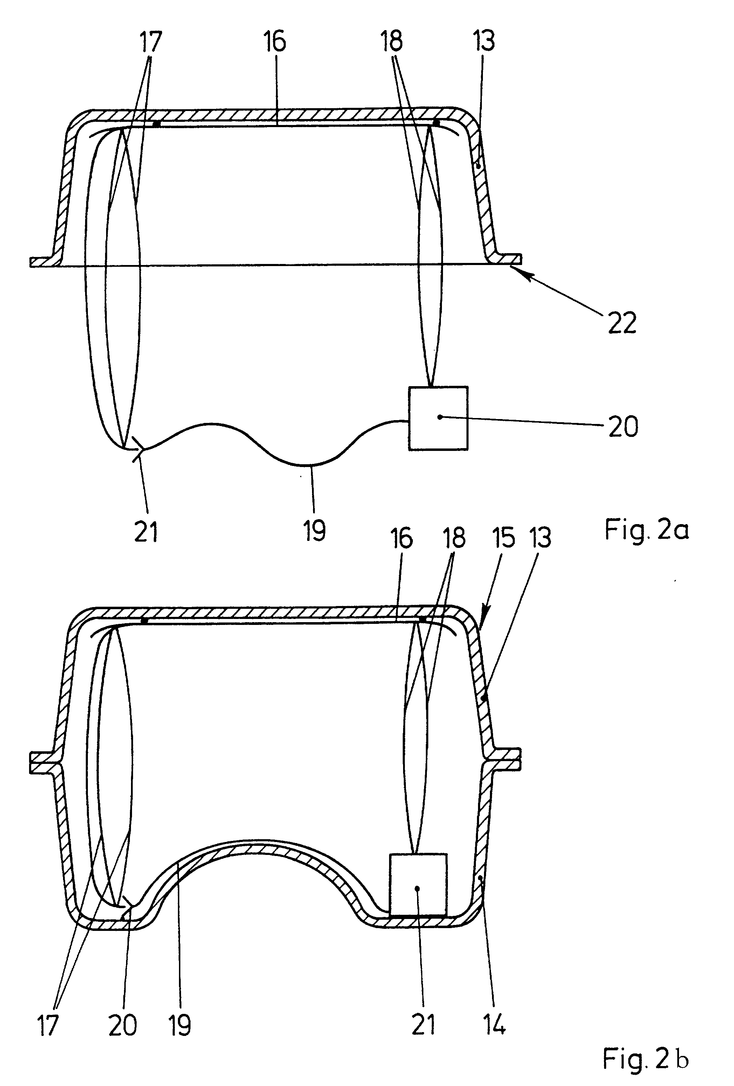

Die Figur 2a zeigt ein oberes Formteil 13 eines in Figur 2b dargestellten, aus zwei Formteilen 13, 14 zusammengesetzten Kraftstoffbehälters 15. An dem oberen Formteil 13 sind mehrere Leitungen 16 zur Belüftung oder zur Förderung von Kraftstoff beispielsweise im Schweißverfahren befestigt. An dem oberen Formteil 13 sind Federelemente 17, 18 befestigt, die mit ihren freien Enden weitere Leitungen 19 und Bauteile 20, 21 tragen. In Figur 2a sind die Federelemente 17, 18 im entspannten Zustand dargestellt.

Das obere Formteil 13 weist einen zum Verschweißen mit dem in Figur 2b dargestellten unteren Formteil 14 vorgesehenen Flansch 22 auf. Nach dem Verschweißen der beiden Formteile 13, 14 befinden sich die Federelemente 17, 18 in einem gespannten Zustand. Hierbei sind die Leitungen 19 und die Bauteile 20, 21 in dem Kraftstoffbehälter 15 gegen das untere Formteil 14 vorgespannt.

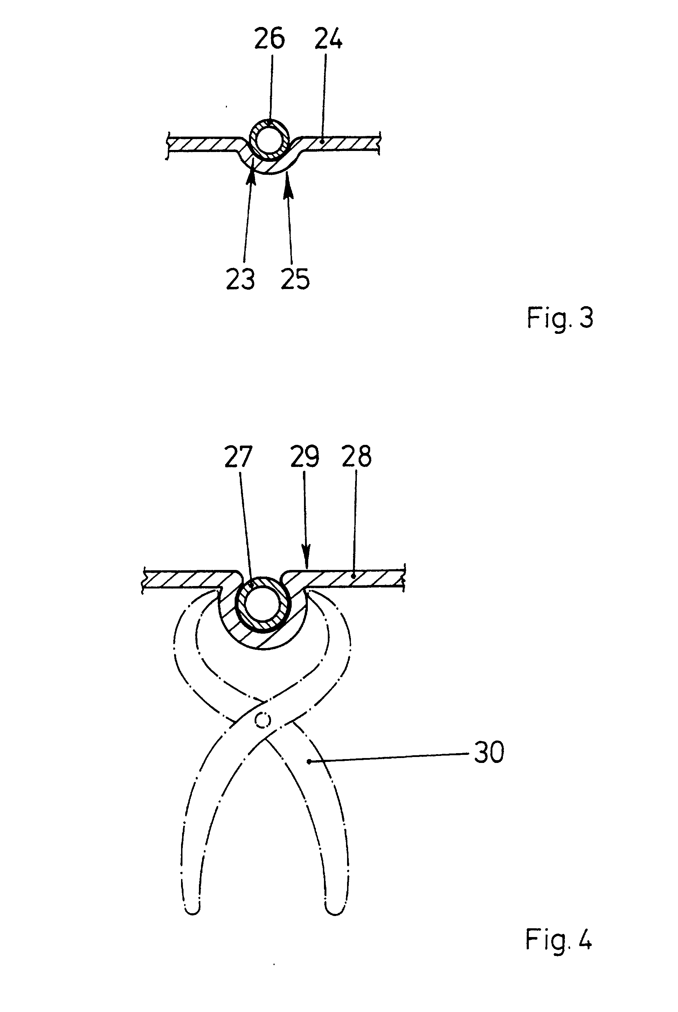

Die Figur 3 zeigt eine in eine Vertiefung 23 einer Wandung 24 eines Kraftstoffbehälters 25 vorgespannte Leitung 26. Das Verfahren, in dem der Kraftstoffbehälter 25 erzeugt wurde, ist hierbei belanglos. Durch die Verspannung in der Vertiefung 23 ist die Leitung 26 gegen eine seitliche Bewegung formschlüssig gesichert.

Die Figur 4 zeigt eine weitere Ausführungsform der formschlüssigen Sicherung einer Leitung 27 an einer thermisch verformbaren Wandung 28 eines Kraftstoffbehälters 29. Hierbei wurde die Wandung 28 im Bereich der Leitung 27 durch Erwärmen erweicht und mit einer hier strichpunktiert dargestellten Zange 30 von außerhalb des Kraftstoffbehälters 29 verformt. Nach dem Abkühlen ist die Leitung 27 an der Wandung 28 formschlüssig befestigt.

## Patentansprüche

1. Kraftstoffbehälter für ein Kraftfahrzeug mit mehreren zu seiner Belüftung oder zur Förderung von Kraftstoff vorgesehenen Leitungen, **dadurch gekennzeichnet, daß** die Leitungen (3 - 5, 16, 19, 26, 27) von zumindest einem Federelement (8, 9, 17, 18) gegen die Innenseite der Wandung (24, 27) des Kraftstoffbehälters (2, 15, 25, 29) vorgespannt sind.

2. Kraftstoffbehälter nach Anspruch 1, **dadurch gekennzeichnet, daß** an den Leitungen (3 - 5, 16, 19) angeschlossene, im Innern des Kraftstoffbehälters (2, 15) angeordnete Bauteile, z.B. eine Saugstrahlpumpe (6) oder ein Schwalltopf (7, 20, 21) von dem Federelement (8, 9) gegen die Innenseite der Wandung des Kraftstoffbehälters (2, 15) vorgespannt sind.

3. Kraftstoffbehälter nach Anspruch 1 oder 2, **dadurch gekennzeichnet, daß** die Leitungen (26, 27) formschlüssig an der Innenseite der Wandung (24, 28) befestigt sind.

4. Kraftstoffbehälter nach zumindest einem der vorhergehenden Ansprüche, **dadurch gekennzeichnet, daß** die Wandung (24) des Kraftstoffbehälters (2, 25) Vertiefungen (12, 23) zur Aufnahme der Leitungen (26) oder der mit den Leitungen (4, 5) verbundenen Bauteile (6, 7) hat.

5. Kraftstoffbehälter nach zumindest einem der vorhergehenden Ansprüche, **dadurch gekennzeichnet, daß** das Federelement (8, 9, 17, 18) bügelförmig gestaltet ist.

6. Kraftstoffbehälter nach zumindest einem der vorhergehenden Ansprüche, **dadurch gekennzeichnet, daß** mehrere der Leitungen (3 - 5) eine bauliche Einheit bilden.

7. Kraftstoffbehälter nach zumindest einem der vorhergehenden Ansprüche, **dadurch gekennzeichnet, daß** die Leitungen (3 - 5, 16, 19, 26, 27) aus demselben Werkstoff gefertigt sind wie der Kraftstoffbehälter (2, 15, 25, 29).

8. Kraftstoffbehälter nach zumindest einem der vorhergehenden Ansprüche, **dadurch gekennzeichnet, daß** das Federelement (8, 9, 17, 18) aus demselben Werkstoff gefertigt ist wie der Kraftstoffbehälter (2, 15).

9. Kraftstoffbehälter nach zumindest einem der vorhergehenden Ansprüche, **dadurch gekennzeichnet, daß** das Federelement (8, 9, 17, 18) einteilig mit den Leitungen (3 - 5, 16, 19) gefertigt ist.

10. Verfahren zur Montage von Leitungen in einem Kraftstoffbehälter, welcher durch ein Erwärmen mit anschließendem Aufblasen eines schlauchförmigen Rohlings innerhalb einer Form erzeugt wird, **dadurch gekennzeichnet, daß** die Leitungen an zumindest einem Federelement befestigt werden, das Federelement anschließend zusammengedrückt und zusammen mit den Leitungen in den Rohling eingeführt wird, und daß der Kraftstoffbehälter nach einem Entspannen des Federelementes durch das Erwärmen mit anschließendem Aufblasen erzeugt wird.

11. Verfahren zur Montage von Leitungen in einem Kraftstoffbehälter, welcher durch Zusammenfügen zweier Formteile erzeugt wird, **dadurch gekennzeichnet, daß** die Leitungen an zumindest einem Federelement befestigt werden, daß ein Teil der Leitungen und/oder des Federelementes an der Innenseite einer der Formteile befestigt wird und daß die Formteile anschließend gegen die Kraft des Federelementes zusammengefügt werden.

12. Verfahren nach Anspruch 10 oder 11, **dadurch gekennzeichnet, daß** die Leitungen und/oder das Federelement nach dem Zusammenfügen der Formteile oder dem Aufblasen des Kraftstoffbehälters an der Innenseite der Wandung des Kraftstoffbehälters verschweißt oder verklebt werden.

13. Verfahren zur Montage von Leitungen in einem thermisch verformbaren Kraftstoffbehälter, nach zumindest einem der Ansprüche 10-12, **dadurch gekennzeichnet, daß** nach dem Zusammenfügen der Formteile oder dem Aufblasen des Kraftstoffbehälters Bereiche der Wandung des Kraftstoffbehälters, gegen die die Leitungen vorgespannt sind, erwärmt und anschließend zur Erzeugung eines Formschlusses der Wandung mit den Leitungen plastisch verformt werden.

## Claims

1. Fuel tank for a motor vehicle, with a plurality of lines provided for its ventilation or for feeding fuel, **characterized in that** the lines (3 - 5, 16, 19, 26, 27) are prestressed against the inside of the wall (24, 27) of the fuel tank (2, 15, 25, 29) by at least one spring element (8, 9, 17, 18).

2. Fuel tank according to Claim 1, **characterized in that** components, e.g. a (suction jet pump (6), a baffle (7, 20, 21) connected to the lines (3 - 5, 16, 19) and arranged inside the fuel tank (2, 15) are prestressed against the inside of the wall of the fuel tank (2, 15) by the spring element (8, 9).

3. Fuel tank according to Claim 1 or 2, **characterized in that** the lines (26, 27) are fastened positively to the inside of the wall (24, 28).

4. Fuel tank according to at least one of the preceding claims, **characterized in that** the wall (24) of the fuel tank (2, 25) has depressions (12, 23) for receiving the lines (26) or the components (6, 7) connected to the lines (4, 5).

5. Fuel tank according to at least one of the preceding claims, **characterized in that** the spring element (8, 9, 17, 18) is designed in the form of a clip.

6. Fuel tank according to at least one of the preceding claims, **characterized in that** a plurality of the lines (3 - 5) form a structural unit.

7. Fuel tank according to at least one of the preceding claims, **characterized in that** the lines (3-5, 16, 19, 26, 27) are manufactured from the same material as the fuel tank (2, 15, 25, 29).

8. Fuel tank according to at least one of the preceding claims, **characterized in that** the spring element (8, 9, 17, 18) is manufactured from the same material as the fuel tank (2, 15).

9. Fuel tank according to at least one of the preceding claims, **characterized in that** the spring element (8, 9, 17, 18) is manufactured in one piece with the lines (3 - 5, 16, 19).

10. Method for the mounting of lines in a fuel tank which is produced by the heating together with subsequent swelling of a tubular blank within a mould, **characterized in that** the lines are fastened to at least one spring element, the spring element is subsequently compressed and introduced together with the lines into the blank, and **in that**, after relaxation of the spring element, the fuel tank is produced by heating with subsequent swelling.

11. Method for the mounting of lines in a fuel tank which is produced by assembling two mouldings, **characterized in that** the lines are fastened to at least one spring element, **in that** part of the lines and/or of the spring element is fastened to the inside of one of the mouldings, and **in that** the mouldings are subsequently assembled counter to the force of the spring element.

12. Method according to Claim 10 or 11, **characterized in that** the lines and/or the spring element are welded or adhesively bonded to the inside of the wall of the fuel tank after the assembly of the mouldings or the swelling of the fuel tank.

13. Method for the mounting of lines in a thermally deformable fuel tank, according to at least one of Claims 10-12, **characterized in that**, after the assembly of the mouldings or the swelling of the fuel tank, fuel tank wall regions against which the lines are prestressed are heated and subsequently subjected to plastic deformation in order to make a positive connection of the wall to the lines.

## Revendications

1. Réservoir de carburant pour un véhicule, comprenant plusieurs conduites prévues pour sa ventilation ou pour l'alimentation en carburant, **caractérisé en ce que** les conduites (3 - 5, 16, 19, 26, 27) sont précontraintes par au moins un élément élastique (8, 9, 17, 18) contre le côté intérieur de la paroi (24, 27) du réservoir de carburant (2, 15, 25, 29).

2. Réservoir de carburant selon la revendication 1, **caractérisé en ce que** des pièces raccordées aux conduites (3 - 5, 16, 19), disposées à l'intérieur du réservoir de carburant (2, 15), p. ex. une pompe à effet Venturi (6), un pot de tranquilisation (7, 20, 21), sont précontraintes par l'élément élastique (8, 9) contre le côté intérieur de la paroi du réservoir de carburant (2, 15).

3. Réservoir de carburant selon la revendication 1 ou 2, **caractérisé en ce que** les conduites (26, 27) sont fixées sur le côté intérieur de la paroi (24, 28) par adhérence de forme.

4. Réservoir de carburant selon au moins l'une des revendications précédentes, **caractérisé en ce que** la paroi (24) du réservoir de carburant (2, 25) a des approfondissements (12, 23) pour le logement des conduites (26) ou des pièces (6, 7) raccordées aux conduites.

5. Réservoir de carburant selon au moins l'une des revendications précédentes, **caractérisé en ce que** l'élément élastique (8, 9, 17, 18) est exécuté en forme d'étrier.

6. Réservoir de carburant selon au moins l'une des revendications précédentes, **caractérisé en ce que** plusieurs des conduites (3 - 5) forment une unité constructive.

7. .Réservoir de carburant selon au moins l'une des revendications précédentes, **caractérisé en ce que** les conduites (3 - 5, 16, 19, 26, 27) sont fabriquées dans le même matériau que le réservoir de carburant (2, 15, 25, 29).

8. Réservoir de carburant selon au moins l'une des revendications précédentes, **caractérisé en ce que** l'élément élastique (8, 9, 17, 18) est fabriqué dans le même matériau que le réservoir de carburant (2, 15).

9. Réservoir de carburant selon au moins l'une des revendications précédentes, **caractérisé en ce que** l'élément élastique (8, 9, 17, 18) est fabriqué d'une seule pièce avec les conduites (3 - 5, 16, 19).

10. Procédé de fixation de conduites dans un réservoir de carburant, lequel est créé à l'intérieur d'un moule par l'échauffement, avec gonflage successif, d'une pièce brute en forme de tuyau, **caractérisé en ce que** les conduites sont fixées sur au moins un élément élastique, **en ce que** l'élément élastique est ensuite pressé et inséré dans la pièce brute avec les conduites, et **en ce que** le réservoir de carburant est créé après la détente de l'élément élastique par l'échauffement avec gonflage successif.

11. Procédé de fixation de conduites dans un réservoir de carburant, lequel est créé par l'assemblage de deux pièces moulées, **caractérisé en ce que** les conduites sont fixées sur au moins un élément élastique, **en ce qu'**une partie des conduites et/ou de l'élément élastique est fixée sur le côté intérieur de l'une des pièces moulées et **en ce que** les pièces moulées sont assemblées ensuite contre la force de l'élément élastique.

12. Procédé selon la revendication 10 ou 11, **caractérisé en ce que** les conduites et/ou l'élément élastique sont soudées ou collées sur le côté intérieur de la paroi du réservoir de carburant après l'assemblage des pièces moulées ou après le gonflage du réservoir de carburant.

13. Procédé de fixation de conduites dans un réservoir de carburant déformable thermiquement selon au moins l'une des revendications 10 - 12, **caractérisé en ce que**, après l'assemblage des pièces moulées ou après le gonflage du réservoir de carburant, des parties de la paroi du réservoir de carburant, contre laquelle les conduites sont précontraintes, sont échauffées et ensuite déformées de manière plastique pour la création d'une adhérence de forme de la paroi avec les conduites.
